# EUROPEAN PATENT APPLICATION

(11) **EP 2 101 294 A1**
(43) Date of publication of application: **16.09.2009**
(21) Application number: 08368009.0
(22) Date of filing: 12.03.2008
(51) Int. Cl.: G06Q 50/00

(54) **A method and system for graphically displaying data**

(71) Applicant: Amadeus S.A.S., 06902 Sophia Antipolis (FR)
(72) Inventor: Savornin, Richard, 06560 Valbonne (FR)
(74) Representative: Anderson, Angela Mary

(57) **Abstract**

A method of graphically displaying data on a graphic representation, such as the map, to a user in order to enable the user to select a service that meets one or more predetermined user-defined criteria, wherein the service includes one or more parameters, such as price, that influences the selection of the service by the user and the graphic representation includes first point, second points and other points, the method comprising the steps of identifying a first point on the graphic representation that is associated with the service and a first predetermined user defined criterion; identifying a plurality of second points on the graphic representation that are associated with a second predetermined user-defined criteria and the service; determining a mathematical function relating to the one or more parameters; the first point; and the or each second point in order to interpolate a mathematical surface matching one or more parameters at the or each second points; displaying the mathematical surface to the user to enable selection of a second or other point based on a required value for the one or more parameters by means of the mathematical surface.

## Description

### Field of the invention

The present invention relates to a method and system for graphically displaying data, in particular for data related to geographic data, such as for travel applications.

### Background of the invention

With the increasing development of Internet services, anyone can book a trip from a departure location to a destination location through a personal computer connected to an Internet network. Many travel agencies on the Internet or web provide different services to inform users about the travel packages they sell. These travel agencies provide travel packages having different criteria, such as departure location, destination locations, categories of hotel, airline companies, etc. When a user requires information about a defined trip from a departure location to destination locations, the user may obtain a list of many proposals of travel packages with different corresponding prices for each of these. Some online travel agencies, for example the Kayak website, already propose other ways to provide the information of the price list by displaying prices on a map, each price being indicated at the destination point. However, such a display is not perceived to be efficient enough to show an accurate overview of the comparable prices for different destination points and to give a clear indication of areas with comparable costs.

One aspect of the present invention is to overcome at least some of the problems associated with the prior art

### Summary of the invention

The present invention provides a method and system for graphically displaying data, as described in the accompanying claims.

According to one aspect of the present invention there is provided a method of graphically displaying data on a graphic representation, such as the map, to a user in order to enable the user to select a service that meets one or more predetermined user-defined criteria, wherein the service includes one or more parameters, such as price, that influences the selection of the service by the user and the graphic representation includes first point, second points and other points, the method comprising the steps of identifying a first point on the graphic representation that is associated with the service and a first predetermined user defined criterion; identifying a plurality of second points on the graphic representation that are associated with a second predetermined user-defined criteria and the service; determining a mathematical function relating to the one or more parameters; the first point; and the or each second point in order to interpolate a mathematical surface matching one or more parameters at the or each second points; displaying the mathematical surface to the user to enable selection of a second or other point based on a required value for the one or more parameters by means of the mathematical surface.

According to a second aspect of the present invention there is provided a system for graphically displaying data on a graphic representation, such as the map, to a user in order to enable the user to select a service that meets one or more predetermined user-defined criteria, wherein the service includes one or more parameters, such as price, that influences the selection of the service by the user and the graphic representation includes first points relating to one predetermined user defined criterion, second points and other points, the system comprising a selection module identifying a first point on the graphic representation that is associated with the service; a filtering module for identifying a plurality of second points on the graphic representation that are associated with one or more of the predetermined user-defined criteria and the service; an interpolation module for determining a mathematical function relating to the one or more parameters; the first point; and the or each second point in order to interpolate a mathematical surface matching the service price at all the second points; display module for displaying the mathematical interpolated surface to the user to enable selection through the surface of a second or other point based on a required value for the one or more parameters.

### Brief description of the drawings

Reference will now be made, by way of example, to the accompanying drawings, in which:
Figure 1 is a schematic representation of a system, in accordance with an embodiment of the invention, given by way of example,
Figure 2 is a schematic representation of a module of a server, in accordance with an embodiment of the invention, given by way of example,
Figure 3 is a representation of a displayed map, in accordance with an embodiment of the invention, given by way of example.

### Detailed description of the preferred embodiments

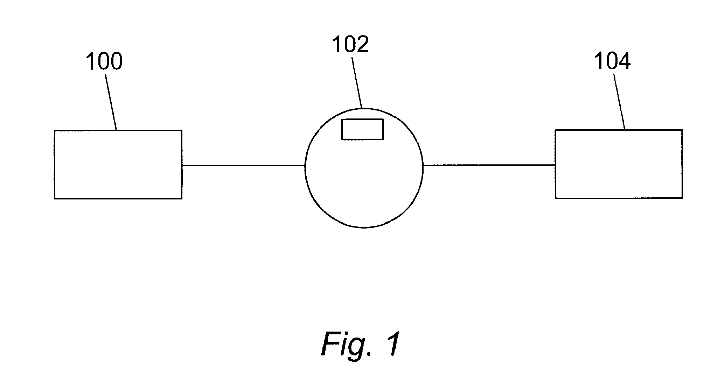

As shown in Figure 1, a user (not shown) having a personal computer 100 (or a mobile device such as a personal digital assistant or a cell phone) is connected to an Internet network 102 in order to send a request with criteria to a dedicated server 104. The invention is not limited to internet services, but may also relate to other applications such as Windows or any other appropriate type of application. The example of Internet in the present description is accordingly not limitating.

The dedicated server 104 refers to a website W having an internet address. The website W provides the user with a graphic representation such as a world map as will be described in greater detail below which may be used for booking a trip or a hotel or whatever. The present invention describes this based on the example of booking a trip. As soon as the user has chosen the departure location on the world map, a request is sent to the server 104 and processed further as set out below.

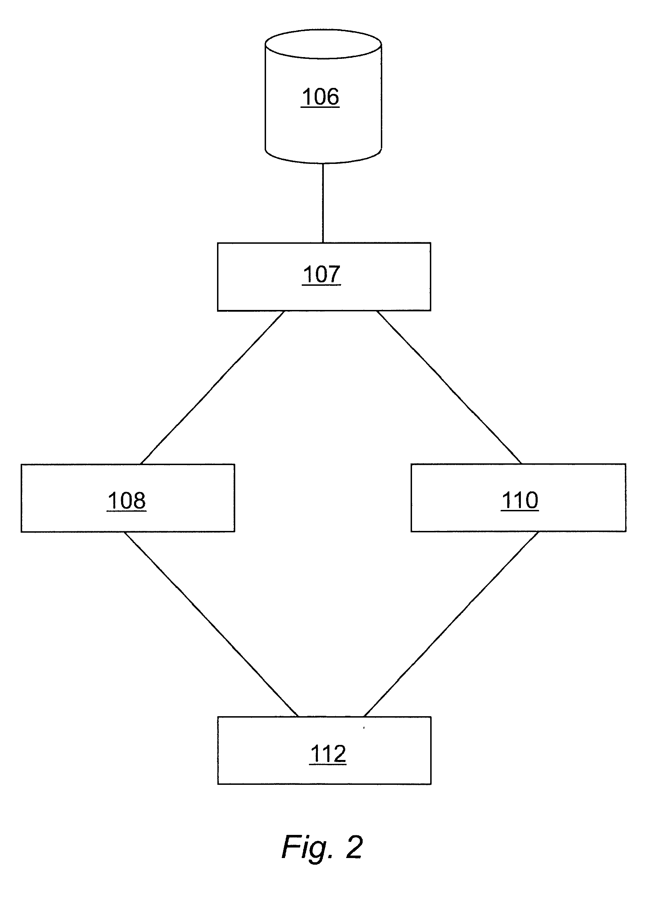

As shown in figure 2, the server 104 comprises different modules such as for example a package database 106, a filtering module 107, an interpolation module 108, a clustering module 110 and a representation module 112.

The database 106 comprises the different fares and/or prices for all the possible destinations in the world. It should be noted that there may be systems which have limited geographical effect and will accordingly have less destinations. The database gathers the different prices and a description of services such as a flight by different airlines or travel agencies in a specific manner to provide prices for all the possible destinations for the geographic extent concerned. The prices refer to the cost of a trip from the selected departure point, airport or city to a destination point, airport or city. The stored prices may be real i.e. available fares or estimated fares e.g. typical prices based on a combination of available prices. Each price refers to a departure airport and a destination in association with corresponding sales conditions such as for example a round trip ticket, requirements to stay over the week end, etc.

The database is linked with a filtering module 107. The filtering module 107 identifies and selects prices from the database which match the criteria of the user such as the departure location i.e. the first point for example. Each possible destination can refer to one price only, which can be the minimum fare or the typical price paid. It is possible that more than one airport matches the criteria related to the departure city. Then, the filtering module calculates the prices for each destination city relating to the departure city such that the lowest price for each destination city is determined. The list of selected prices is used during the rest of the process, as will be described below. The filtering module 107 is connected to both an interpolation module 108 and a clustering module 110.

The interpolation module 108 processes prices from the list of selected prices resulting from the filtering process, to build a function relating to the geographical location (latitude and longitude or whatever). This function represents a virtual price, which could be an approximate value or may be made up as will be described later. The function creates such prices to obtain a mathematical surface which could be either continuous or discontinuous. This function or interpolated function interpolates the price value from the list of selected prices, at each destination airport. Therefore, the function creates virtual prices not included in the database at least for areas where there is no available data. The existence of the virtual prices is to allow the surface to be homogenous over the entire map and not only at the airport locations for which there is available pricing information. Any interpolation method could be used to carry out this interpolation. The selected function matches or nearly matches the price from the list of selected prices and the "reachable" destination airport locations. The aim of the interpolation, in accordance with the present invention, is to define a function, which may decrease or increase in a monotonous manner between adjacent airports. Thus, as will be described later, the representation module 112 displays a map which represents the departure airport and matching destinations which could be an airport or a city. Each airport (from the list generated by the filtering module) has an associated price, which is the price as defined by the filtering module 107. The price is construed as a parameter to define a virtual elevation on the map. The departure airport is defined with a price or an elevation of zero. When applying the interpolation module 108, all the different points of the map are located on a virtual 3-D surface such as an elevation surface which represents the price for the destination airport or a virtual price at other non-defined locations.

Different algorithms may exist to carry out the interpolation. The Delaunay triangulation algorithm provides an interpolation by associating the airports having a defined price (or elevation) with the summits of triangles in order to obtain a network of triangles for each location. The departure airport has an elevation of zero. The interpolation is done by searching and creating a "portion of plan" matching the three elevation levels at each summit. The interpolation is iteratively carried out for each triangle. The resulting surface is a continuous 3D surface.

A variation of this invention is to draw lines between the departure airport and each other airport. The resulting shape is a star shape, where the departure airport is the central point with a price equal to zero and where there is one point for each drawn line where the price is known. The interpolation is carried out between two lines that match three required points (the two possible destinations and the departure).

Another algorithm is based on a Voronoï diagram. This algorithm meshes the map in areas each comprising only one airport and all the nearest points that are closer to this airport than to any other one. The algorithm is based on a calculation taking into account the distance to this airport or the time to reach the airport, for example. Then the virtual price is set to the price of the closest airport.

Another algorithm can be based on a bitmap representation where the algorithm allocates to any destination point (different from a reachable airport) an elevation equal to the average of each price for each airport divided by the distance from this airport to the considered destination point (or any function of this distance).

Another method may use any polynomial approximation algorithm.

In parallel to this interpolation process, the clustering module 110, connected to the filtering module 107, clusters the different existing prices i.e. real in a more appropriate manner to provide a clustering result. The appropriate manner can be defined in a specific process (not presented here) based on a condition in order to cluster or gather prices. For example, the condition can be a defined range with a defined list of intervals of prices. The condition can also be a dynamic range, wherein the only defined rule could be to split all the prices into 10 ranges or categories or less than 10 ranges or categories with an equal number of reachable airports. Each category of prices may vary from one request to another. The condition can also be to combine the prices that are very close to one another and define the boundary where a gap exists in the price distribution. Another implementation of this clustering process can be to set n to be equal to the total number of values in the list of selected prices. In this situation, there will be no clustering process because each different price will have a different representation. This may be represented graphically as a gray scale, for example.

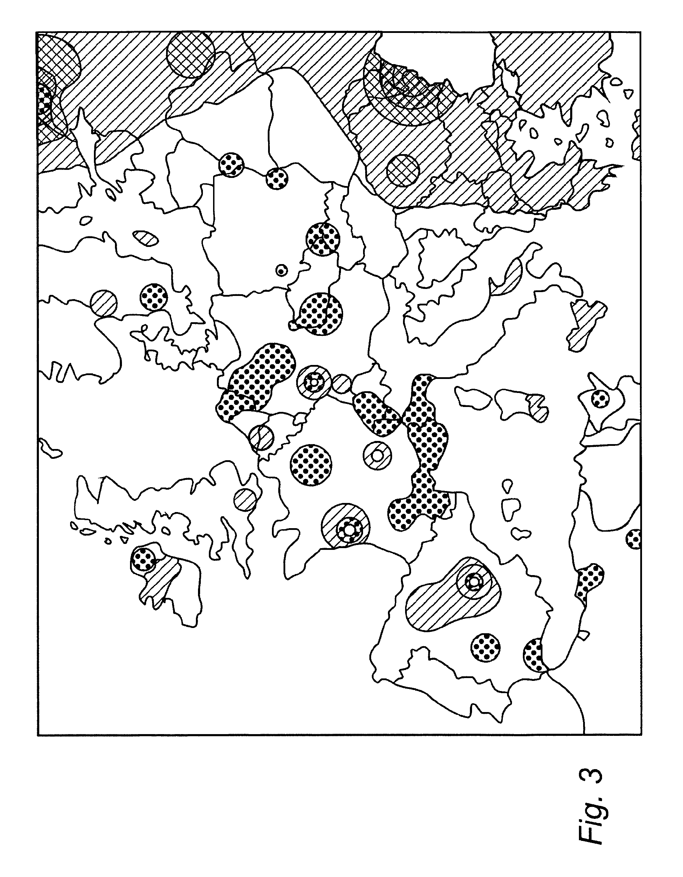

Both interpolation module 108 and clustering module 110 are connected to the display module 112. The clustering result determines a color to represent a value generated by the interpolated function. The display module 112 represents on a 2-D map the value of the 3-D surface (elevation equal to the Virtual Price as a function of the latitude and longitude) based on the determined color. Alternative methods used for map representation can be used here, for example an iso elevation line that matches the boundary of the clustering process. The display module may set a different color for each area to show the different virtual price ranges as a region of the same elevation (as shown in figure 3).

The above-described representations and steps needed for the process are not necessarily displayed to the user.

The different steps of the method when the invention is in operation will now be described. Consider a user that would like to determine the cost to travel from Paris to "somewhere" in the world. The user may connect to the Internet in order to access a specific website W associated with the present invention. The website discloses graphic representation such as a map (which may be a world map) which displays different locations such as different countries. The website allows the user to choose one or more predetermined user defined criteria. The map comprises different points; some of which are specifically named, for example cities and airports. The map allows the user to choose a departure location i.e. a first point as a first criterion with a selection module. The departure location can be a city or a name of an airport. If the user selects a city, a specific function can deduce the corresponding nearest airport (or airports) for use later in the process. The user can also select the departure location by selecting a specific point on the map, for example by clicking and dragging on the map to define a departure area that includes one or more airport(s). This selection can be a graphic selection through a square or any other possible shape. The website also displays different lists of criteria, such as departure range, duration range, airlines, etc. Thus, the user can indicate the departure date range, for example this week or this month and the duration range for example one week, two weeks or four days (including a weekend or not, etc.). The user does not need to indicate any targeted price or range of prices. The user also no longer needs to indicate a specific destination for the trip.

The website discloses a map wherein the user only has to select a departure location an area around Paris (for example) or to select one of the Paris airports such as Orly Airport or Charles de Gaulle Airport for example. The user selects Orly Airport as a criterion in the present invention. The user also selects further criteria such as departure range and a duration range for the trip. Thus, the filtering module only extracts, from the database, a list of destinations and prices which correspond to trip from Paris (Orly) to anywhere in the world, matching the criteria of the traveler, whatever the price may be. Then, in a first step, the interpolation module defines the Delaunay triangulation (or any other appropriate interpolation) to link the remaining destination airports or the second points from the resulting price list in order to obtain a network of points (possible destinations), wherein each point represents an airport that can be reached from Paris (Orly). In a second step the interpolation module extrapolates the virtual prices i.e. other points from a surface of a point on each triangle that matches the elevation at the summit. Such a function allows definition of a continuous surface, which is monotonous between adjacent airports and is made up of the virtual prices and the real prices. The clustering module then runs a first method. The clustering module defines price ranges in order to allow the representation module to color each range of price in a particular color as will be described below. The clustering module can also process a second method. The second method refers to a determination of the range of prices based on the display capacity or the processing power available to the user. Thus, considering a standard bitmap image of 640*480 pixels and having a 256 gray levels (or a million of colors bitmap), i.e. each pixel may have 256 (or millions) of different aspects. The clustering module can provide price ranges based on the or different aspects number. Although in reality, a lower number may be selected for those images with very high color choices. Therefore, each range of prices is represented with a predetermined color or hue. Adjacent price ranges may have a gradually and continuously darkening color. Thus, no specific, delimited zones are represented, as will be described below, the representation deals more with only one zone having different nuances of colors.

At this point the representation module displays the map of the world to the user. The map represents either different zones isolated as shown in figure 3, or a continuous area having graduated shading or changes to tone or hue of the color. The user can then restrict the destination countries, cities or areas by specifically selecting an area, for example. After this selection, part or all of the processes are restarted to recalculate the new elevation surface representing the range of prices. At the end of the process, the user only has to choose and select the service or the flight based on the service or the flight depending on the constraints of budget or time of the user. Therefore the user selects the service having user-predetermined criteria with a user required value relating for example to the duration range of the trip or the price of the flight.

Price does not constitute a predetermined user criterion in respect of the present invention, instead price constitutes a parameter of the service, e.g. the flight. The flight may have other parameters such as departure and destination location, date, time, class of travel, name and details of airline or customers etc. Predetermined user criteria include departure location, length of journey, distance, specific requirement e.g. skiing, beach, theatre etc., or any other appropriate criteria.

Thus, a method for displaying, on a map discrete prices relating to a service by extrapolating these prices by a 3D surface, the 3D surface converted into 2D, is thus displayed instead of the discrete values. In this way, the invention provides many advantages as have been illustrated above.

This invention has been applied to the purchase of tickets in the travel environment. However, it will be appreciated that the invention may apply to other environments, for example other selling and marketing applications such as hotels in a specific zone; combinations of flight and hotel; price variation for any service or articles over a distance or space.

It will be appreciated that this invention may be varied in many different way and still remain within the intended scope and spirit of the invention.

## Claims

1. A method of graphically displaying data on a graphic representation, such as the map, to a user in order to enable the user to select a service that meets one or more predetermined user-defined criteria, wherein the service includes one or more parameters, such as price, that influences the selection of the service by the user and the graphic representation includes first point, second points and other points, the method comprising the steps of:
- identifying a first point on the graphic representation that is associated with the service and a first predetermined user defined criterion;
- identifying a plurality of second points on the graphic representation that are associated with a second predetermined user-defined criteria and the service;
- determining a mathematical function relating to the one or more parameters; the first point; and the or each second point in order to interpolate a mathematical surface matching one or more parameters at the or each second points;
- displaying the mathematical surface to the user to enable selection of a second or other point based on a required value for the one or more parameters by means of the mathematical surface.

2. A method as claimed in claim 1, wherein the step of identifying a first point comprises identifying a departure location.

3. A method as claimed in claim 1 or claim 2, wherein the step of identifying a plurality of second points comprises a step of identifying one or more destination locations associated with the first point.

4. A method as claimed in any preceding claims further comprising identifying a departure range for the service.

5. A method as claimed in any preceding claim, further comprising identifying a duration range for the service.

6. A method as claimed in any preceding claim wherein the step of determining a mathematical function comprises a step of determining an approximation function by interpolation.

7. A method as claimed in any preceding claim wherein the step of displaying the mathematical surface comprises the step of displaying the mathematical surface to represent second or other points in a different range of colors based on the one or more parameters.

8. The method as claimed in claim 7, further comprising displaying a color for each value of said one or more parameters thereby presenting a color varying mathematical surface.

9. The method of claim 7, further comprising displaying the color ranging mathematical surface top enable a user to select a parameter based on the color which matches user defined criteria.

10. A computer program comprising instructions for carrying out the method of any of claims 1 to 8 when said computer program is executed on a programmable apparatus

11. A system for graphically displaying data on a graphic representation, such as the map, to a user in order to enable the user to select a service that meets one or more predetermined user-defined criteria, wherein the service includes one or more parameters, such as price, that influences the selection of the service by the user and the graphic representation includes first points, second points and other points, the system comprising:
- a selection module identifying a first point on the graphic representation that is associated with the service and a first predetermined user defined criterion;
- a filtering module for identifying a plurality of second points on the graphic representation that are associated with a second predetermined user-defined criteria and the service;
- an interpolation module for determining a mathematical function relating to the one or more parameters; the first point; and the or each second point in order to interpolate a mathematical surface matching one or more parameters at the or each second points;
- a display module for displaying the mathematical surface to the user to enable a second or other point based on a required value for the one or more parameters by means of the mathematical surfaces.

12. A system as claimed in claim 11, further comprising a clustering module for collecting ranges of one or more parameters to provide different ranges of color based on the one or more parameters to enable user selection of a required value of one or more parameters.
